# FASCICULE DE BREVET EUROPEEN

(11) **EP 1 697 053 B1**
(45) Date de publication et mention de la délivrance du brevet: **25.05.2016**
(21) Numéro de dépôt: 04816455.2
(22) Date de dépôt: 21.12.2004
(51) Int. Cl.: B03D 1/16, B01D 21/00, B01D 21/08

(54) **PROCEDE ET REACTEUR DE TRAITEMENT PAR FLOCULATION**
VERFAHREN UND REAKTOR ZUR FLOCKUNGSBEHANDLUNG.
METHOD AND REACTOR FOR FLOCCULATION TREATMENT

(30) Priorité: 22.12.2003 FR 0315161
(43) Date de publication de la demande: 06.09.2006
(73) Titulaire: Veolia Water Solutions & Technologies Support, 94410 Saint-Maurice (FR)
(72) Inventeur: ESSEMIANI, Karim, F-92100 Boulogne Billancourt (FR); URSEL, Valéry, F-94410 Saint Maurice (FR)
(74) Mandataire: Santarelli
(86) Numéro de dépôt international: PCT/FR2004/003323
(87) Numéro de publication internationale: WO 2005/065832

(56) Documents cités:
- EP-A- 0 680 933
- WO-A-97/35655
- WO-A-03/070645
- FR-A- 1 392 469
- FR-A- 2 119 272
- FR-A- 2 268 757
- FR-A- 2 380 056
- US-A- 2 295 714
- US-A- 4 303 517

## Description

### I - Domaine technique de l'invention

L'invention concerne un procédé et un réacteur pour le traitement par floculation d'un fluide brut à traiter, notamment utilisable dans le domaine du traitement de l'eau de processus industriels, celui de l'eau potable et celui des eaux usées municipales ou industrielles.

### II - Etat de l'art antérieur

Divers traitements de fluide, notamment dans le domaine du traitement de l'eau, impliquent le mélange d'un fluide brut à traiter avec un fluide ou flux secondaire, en vue de faire réagir le flux secondaire avec des composants du fluide principal ; ce fluide secondaire comporte en pratique un floculant et le plus souvent un matériau granulaire sur lequel vont se former les flocs résultant de l'action du floculant avec les impuretés du fluide brut à traiter ; on parle en pratique de traitement physico-chimique à flocs lestés ; ces mélanges et réactions entre les fluides sont communément réalisés dans des réacteurs ouverts à mélange intégral équipés d'agitateurs à arbre vertical et flux axial.

Un traitement de réaction physico-chimique implique en principe la dispersion du (ou des) fluide(s) secondaire(s) dans le fluide brut à traiter, leur mélange intensif, puis une durée de réaction (aussi faible que possible) à une intensité de brassage faible (par rapport à l'étape de mélange intensif), étapes qui conduisent généralement à l'utilisation de plusieurs cuves ou réacteurs en série.

L'existence de possibles courts-circuits (« by-pass ») entre l'entrée et la sortie des cuves, ainsi que l'utilisation en pratique incomplète du volume de celles-ci, facilement mise en évidence par une modélisation mathématique couplée à des modèles physiques, conduisent habituellement à l'augmentation de la taille de ces réacteurs et/ou à la mise en oeuvre de puissances d'agitation supplémentaires. Mais cela induit une augmentation du coût d'investissement de même que celui de fonctionnement. De manière classique, il est en outre commun de chercher à disposer l'entrée et la sortie d'une cuve donnée à la plus grande distance possible l'une de l'autre, par exemple une entrée en position basse à une extrémité de la cuve, et la sortie en position haute à une autre extrémité, mais cela se révèle gênant lorsqu'il faut monter plusieurs cuves en série.

Par ailleurs, afin d'éviter la mise en rotation de la masse liquide, communément appelé vortex, reconnue comme néfaste aux performances du mélange, il a déjà été proposé de disposer des cloisons verticales (baffles) contre les parois latérales (cf. livre « Mixing in the chemical industry » - Sterbacek et Tausk, Pergamon Press,1965, pp 278-301). Selon ce document, l'ajout de cloisons verticales permet d'augmenter la turbulence (et donc le mélange) à condition que la largeur des chicanes soit comprise entre 0.056 et 0.12 du diamètre de l'agitateur et il est préférable que ces cloisons soient dans l'écoulement plutôt que contre les parois. En fait ce document mentionne aussi, pour des raisons historiques, un croisillon formé de deux parois verticales montées sur le fond, à proximité de l'agitateur, mais il est indiqué que le processus est alors difficile à contrôler et qu'il y rapidement un encrassement avec les particules solides du liquide en circulation. Il est indiqué aussi que ces parois induisent une augmentation de la consommation d'énergie.

Dans le cas de cuves de grande profondeur, il est connu de disposer plusieurs mobiles dans le volume de la cuve, le long des arbres d'agitation, pour augmenter la fraction du volume mis en turbulence ; il a toutefois été reconnu qu'on pouvait éviter l'ajout de tels mobiles superposés en disposant un tube concentrique (guide-flux) autour du mobile, celui-ci étant monté à la sortie de ce tube (cf livre précité de 1965). Un tel guide-flux agit à la manière d'un tube d'aspiration qui contribue à augmenter la fraction du volume qui est brassé, et a l'avantage de permettre une recirculation interne. Mais cet effet d'aspiration est souvent associé à un mouvement de rotation du type vortex.

Dans le domaine du traitement des eaux, notamment en ce qui concerne l'étape de floculation, il a déjà été proposé, par exemple dans le document FR-2 553 082, de réaliser une chambre de réaction avec une zone centrale munie d'une hélice à flux axial ascendant et une zone périphérique autour de cette zone centrale. L'eau à traiter, éventuellement additionnée des réactifs nécessaires, et à laquelle sont mélangées des boues obtenues précédemment lors du traitement, est introduite à la base de la zone centrale tandis qu'un adjuvant tel qu'un polymère est introduit dans cette zone. Il se crée une recirculation interne, la zone périphérique constituant une zone de floculation lente. Cette zone centrale est délimitée par un tube vertical disposé dans une enceinte parallélépipédique de sorte qu'on peut dire que cette zone centrale est double. Le mélange passe ensuite dans une enceinte intermédiaire avant de passer dans une zone de séparation. On peut noter qu'une telle architecture fait intervenir un grand nombre de zones.

On connaît en outre, d'après le document WO-98/14258, une installation dans laquelle une enceinte centrale de recirculation interne comporte un tube central dans lequel est(sont) disposée(s) une ou plusieurs hélice(s) à mouvement axial ascendant, une arrivée de matériau granulaire et une arrivée de floculant. Le fluide brut à traiter est introduit à la base de ce tube, passe par surverse dans la zone annulaire de la zone centrale puis, selon la taille des flocs, remonte dans le tube pour être recirculé ou dans la zone périphérique de clarification. L'hélice apporte juste assez de turbulences pour maintenir les solides en suspension sans les cisailler, ce qui peut conduire à un mélange lent et donc nuire aux performances.

Le document FR 2 380 056 a trait à des techniques de décantation et en particulier un décanteur mécanique destiné à séparer en continu des solides contenus dans une solution, notamment par mélange à des agents de floculation. Le décanteur mécanique est destiné à traiter des boues minérales, des déchets industriels et des eaux résiduaires. Le décanteur mécanique comprend une cuve destinée à contenir une masse de liquide tranquille; une colonne tubulaire montée verticalement dans cette cuve; un dispositif qui, monté à l'extrémité supérieure de cette colonne, y déverse un courant de la solution primitive; des compartiments qui, superposés dans la colonne, sont destinés à recueillir successivement la solution qui s'y mélange à des agents de floculation; des organes qui, montés dans chacun de ces compartiments, sont destinés à brasser le liquide qu'ils contiennent; des ajutages qui, montés dans chacun des compartiments, sont destinés à disperser dans la solution qu'ils contiennent un réactif chimique afin de faire davantage floculer les solides qu'elle contient en suspension; un conduit qui, communiquant d'une part avec le plus bas des compartiments et d'autre part avec la cuve, est destiné à chasser la solution traitée par les agents de floculation dans la couche de boue épaisse qui est au fond de la cuve; un mécanisme qui, monté dans la cuve et comportant des bras râteleurs, amène le contenu solide de la couche précitée vers une conduite qui l'évacue par en bas; et un déversoir qui, monté sur la cuve, évacue le liquide clarifié qui surnage dans sa partie haute.

### III Problèmes techniques et solutions selon l'invention

L'invention a pour objet une combinaison améliorée de compacité, d'efficacité et de coût modéré, que ce soit du point de vue équipement ou du point de vue fonctionnement.

Ainsi, un objet de l'invention est un réacteur de floculation dans lequel, grâce à un (ou plusieurs) agitateur(s) et la délimitation de zones de niveaux d'agitation différents, la cinétique de réaction entre un fluide brut à traiter et un floculant (et éventuellement un matériau granulaire formant ballast de floculation) est améliorée, la fraction utile du volume du réacteur est augmentée tout en réduisant les risques de by-pass (c'est-à-dire de non-circulation dans les diverses zones de niveaux d'agitation différents), avec un niveau modéré de la puissance consacrée aux niveaux d'agitation.

Un autre objet de l'invention est un procédé de traitement par floculation-séparation d'un fluide brut à traiter combinant, dans l'encombrement d'une cuve unique, deux zones de niveaux d'agitation différents, maximisant les turbulences pour un niveau d'énergie donné et pour un temps donné de mise en contact.

Un autre objet, subsidiaire, de l'invention est de faciliter l'enchaînement de plusieurs réacteurs, du même type ou non, au moment de la construction ou ultérieurement, ayant une taille identique ou non.

L'invention propose à cet effet, tout d'abord, un procédé de traitement par floculation d'un fluide brut à traiter chargé en impuretés en suspension, colloïdales ou dissoutes, selon lequel :
- on fait circuler le fluide brut à traiter avec un réactif floculant dans une cuve de floculation en sorte d'obtenir un mélange floculé dans lequel les impuretés forment des flocs,
- on fait circuler ce mélange floculé dans une zone de séparation où l'on sépare ce mélange floculé en un effluent clarifié et des boues comportant ces flocs,
caractérisé en ce que :
* on délimite dans la cuve de floculation, au moyen d'un tube guide-flux complètement immergé, une zone centrale dans laquelle on provoque, par agitation (8), un écoulement axial turbulent du mélange du fluide brut à traiter et du floculant dans une direction axiale de ce tube guide-flux,
* on répartit (5) angulairement cet écoulement, au moyen d'un dispositif statique s'opposant à la rotation de cet écoulement et disposé à la sortie de ce tube guide-flux,
* on laisse circuler ce mélange dans une zone périphérique (3) entourant cette zone centrale, dans un sens opposé, jusqu'à l'entrée de la zone centrale, et
* on fait passer une fraction de ce mélange vers la zone de séparation.

Il peut être noté que l'invention préconise ainsi de combiner une délimitation d'une zone centrale, de haut niveau d'agitation, vis-à-vis d'une zone périphérique de moindre niveau d'agitation, avec une distribution angulaire de l'écoulement sortant de la zone centrale, grâce à un dispositif statique s'opposant à la rotation du fluide à la sortie du tube guide-flux, de manière à maximiser les turbulences et minimiser les zones mortes échappant à la circulation induite dans le volume des zones centrale et périphérique. Or il a été exposé ci-dessus que l'utilisation d'un dispositif statique pour empêcher un écoulement de tourner avait été abandonnée comme étant difficile à contrôler, et n'avait été proposé qu'en combinaison avec un agitateur ; l'homme de métier n'avait donc aucune raison de penser qu'un tel élément statique pouvait contribuer à résoudre le problème technique. Et rien ne pouvait laisser penser qu'il pouvait y avoir un intérêt à utiliser un tel dispositif statique en combinaison avec un guide-flux, même en s'inspirant des solutions connues mettant en oeuvre un guide-flux dans une zone de floculation.

Selon des dispositions préférées de l'invention, éventuellement combinées :
- l'on maintient l'écoulement dans la zone centrale à un débit valant entre 1 et 20 fois le débit d'entrée du fluide brut à traiter, ce qui correspond à une recirculation suffisante pour réduire les risques de court-circuit (by-pass) et induire des turbulences suffisantes pour assurer un bon mélange sans nécessiter une consommation trop importante d'énergie,
- l'on divise la zone périphérique en au moins une zone périphérique amont communiquant avec l'entrée du fluide brut à traiter dans la cuve de floculation, et une zone périphérique aval communiquant avec la sortie du mélange floculé, en sorte d'imposer au fluide brut à traiter qui entre dans la cuve de floculation de passer au moins une fois dans la zone centrale avant de passer vers la zone de séparation ; cela contribue bien sûr à éviter les courts-circuits, sans consommation significative d'énergie et sans impliquer un grand nombre de cycles de recirculation,

- on provoque l'écoulement axial turbulent du mélange selon une direction verticale ; cela correspond à une configuration classique en soi, bien maîtrisée,
- on provoque l'écoulement axial turbulent vertical par agitation à mi-hauteur de la zone centrale, ce qui contribue à obtenir un bon mouvement d'aspiration à l'entrée de la zone centrale et un bon refoulement à la sortie de celui-ci, avec donc une distribution angulaire à cette sortie, sans toutefois exiger plus d'un seul agitateur,
- on provoque l'écoulement axial turbulent du mélange dans un mouvement descendant, et on répartit angulairement le mélange sensiblement sur au moins les deux tiers de la hauteur entre le niveau de sortie de la zone centrale et le niveau du fond de la cuve de floculation ; il mérite d'être noté que c'est l'inverse du sens utilisé aujourd'hui, lorsqu'il y a une recirculation interne dans une zone de floculation ; mais des études de modélisation récentes ont montré qu'il est tout à fait réaliste, contrairement à ce que pouvait penser l'homme de métier, de prévoir un mouvement descendant, en combinaison avec un dispositif statique de répartition angulaire, sans pour autant induire d'encrassement intempestif de ce dernier par les flocs en cours de formation ou de croissance ; or le fait de choisir un sens descendant évite de provoquer des vaguelettes en surface en conséquences des turbulences induites, tout en profitant du fond de la cuve pour provoquer un rapide changement de sens dans l'écoulement du mélange entre la zone centrale et la zone périphérique.

Dans ce cas de mouvement descendant, de manière préférée :
- on répartit angulairement le mélange sensiblement sur toute la hauteur entre le niveau de la zone centrale et le niveau du fond de la cuve de floculation, ce qui garantit une répartition angulaire de tout l'écoulement sortant du tube guide-flux,
- on dispose le tube guide-flux délimitant la zone centrale de telle manière que son extrémité basse formant sortie est située vis-à-vis du fond de la cuve de floculation à une distance comprise entre 1/3 et 2/3 de la largeur moyenne de ce tube ; cela contribue à obtenir une inversion du sens d'écoulement sans grand risque de ralentissement intempestif de cet écoulement,

- on dispose le tube guide-flux délimitant la zone centrale de telle manière que son extrémité haute formant entrée est située vis-à-vis du niveau de la surface libre du contenu de la cuve de floculation à une distance comprise entre 1/3 et 2/3 de la largeur moyenne de ce tube, ce qui contribue à assurer une alimentation efficace du tube guide-flux sans induire de mouvements de surface intempestifs,
- on divise cette zone périphérique sur une partie supérieure de sa hauteur en au moins une zone périphérique amont communiquant avec l'entrée du fluide brut à traiter dans la cuve de floculation, et une zone périphérique aval communiquant avec la sortie du mélange floculé, en sorte d'imposer au fluide brut à traiter qui entre dans la cuve de floculation de passer au moins une fois dans la zone centrale avant de passer vers la zone de séparation, ce qui permet d'obtenir d'une manière particulièrement simple les avantages précités à propos de l'usage, de manière générale, d'une telle division,
- on réalise cette division sur sensiblement la moitié supérieure de cette hauteur, ce qui correspond à une hauteur suffisante pour minimiser les risques de contournement de la zone centrale.

Selon d'autres caractéristiques préférées du procédé de l'invention :
- on fait entrer le fluide brut à traiter et on fait sortir du mélange floculé sensiblement au niveau de la zone d'entrée du tube guide-flux ; cela contribue à permettre le montage en série d'installations pour la mise en oeuvre du procédé, et participe à un guidage efficace du fluide à traiter vers la zone centrale ainsi que du mélange ayant circulé dans la zone périphérique,
- le floculant est un polymère naturel, minéral ou de synthèse,
- le réactif floculant avec lequel on mélange le fluide brut à traiter dans la cuve de floculation a été introduit dans le fluide à traiter en amont de cette cuve,
- en variante, le réactif floculant avec lequel on mélange le fluide brut à traiter est introduit dans la cuve de floculation, par exemple entre l'entrée de la cuve de floculation et l'entrée du tube guide-flux ; mais il est recommandé que le réactif floculant soit introduit dans la zone centrale, de préférence en limite de cette zone centrale, ce qui assure un mélange très rapide avec le fluide à traiter ; cet effet est renforcé lorsqu'on injecte au moins une fraction du réactif floculant de façon annulaire à la périphérie de l'entrée de la zone centrale, co-axialement au tube guide-flux,
- on mélange en outre au fluide brut à traiter, dans la cuve de floculation, un matériau pulvérulent, qui est de préférence un ballast constitué d'un matériau granulaire insoluble plus lourd que le fluide brut à traiter, de manière à servir de lest pour les flocs en formation ou en cours de croissance ; il s'agit avantageusement d'un sable fin de granulométrie comprise entre 20 et 300 microns, dont le prix de revient est particulièrement modéré,
- on traite les boues obtenues en sortie de la zone de séparation, on y récupère du ballast que l'on recycle dans la cuve de floculation, ce qui permet de ne pas perdre le matériau pulvérulent dans les boues mises au rebut à la sortie de la zone de séparation, tout en réduisant le volume de ces rebuts,
- le fluide brut à traiter a été, préalablement à son introduction dans la cuve de floculation, mélangé avec un coagulant, ce qui contribue d'autant plus à l'efficacité de la séparation finale que le fluide brut à traiter est de l'eau à traiter ; dans ce cas, de manière préférée, l'eau à traiter a été, préalablement à son introduction dans la cuve de floculation, mélangée avec un coagulant comportant un sel minéral, tel qu'un sel de fer ou d'aluminium,
- la séparation est réalisée par décantation ou, selon une variante, par flottation, avantageusement à l'aide d'organes d'aide à la séparation tels que des plaques, des lamelles, ou des tubes inclinés ou verticaux ; de manière tout à fait avantageuse, le mélange floculé est introduit de manière tangentielle dans la zone de séparation en sorte d'ajouter un effet vortex s'ajoutant à l'effet de décantation ; la séparation s'en trouve améliorée, pour un temps de traitement donné, ou s'en trouve accélérée, pour un niveau de séparation donné.

Selon un autre aspect de l'invention, celle-ci propose, pour la mise en oeuvre du procédé selon un mode préféré de mise en oeuvre, un réacteur destiné au traitement par floculation d'un fluide brut à traiter chargé en impuretés en suspension, colloïdales ou dissoutes, comportant une cuve munie d'au moins une entrée de fluide et d'au moins une sortie de fluide, et au moins une zone de floculation au sein d'un bain où le fluide à traiter est mélangé à un floculant pour former des flocs, comportant :
- un tube guide-flux, ouvert à ses deux extrémités et disposé verticalement en sorte d'être complètement immergé dans le bain de la cuve tout en restant à distance du fond de cette cuve, délimitant une zone centrale vis-à-vis d'une zone périphérique, ces zones centrale et périphérique communiquant l'une avec l'autre aux deux extrémités de ce tube, la zone périphérique communiquant avec l'entrée et la sortie de fluide,
- un agitateur à arbre vertical disposé dans ce tube en sorte d'y générer un mouvement axial turbulent selon une direction verticale.
- un croisillon formé de plusieurs parois verticales s'étendant horizontalement à partir d'une arête commune sensiblement située dans le prolongement de l'axe de l'agitateur, en aval de celui-ci, en sorte de répartir angulairement l'écoulement sortant du tube vers la zone périphérique.

Un tel réacteur présente les avantages présentés ci-dessus dans le cas d'une mise en oeuvre du procédé avec un mouvement turbulent vertical descendant.

Selon des dispositions préférées de l'invention, parfois analogues à celles mentionnées ci-dessus à propos du procédé de l'invention :
* le tube guide-flux a une section constante, ce qui contribue à assurer un écoulement rapide du mélange,
* le tube guide-flux a une forme cylindrique (au sens restrictif du terme, à savoir que sa section est un cercle), ce qui correspond à une structure particulièrement simple ; en variante, la section est polygonale régulière, etc...,
* l'agitateur est disposé sensiblement à mi-hauteur dans le tube,
* le tube guide-flux a un diamètre compris entre 102% et 120% du diamètre de l'agitateur, ce qui assure un bon brassage dans toute la section du tube guide-flux,
* le diamètre hydraulique de la zone centrale est compris entre 40% et 60% de la largeur moyenne de la zone de floculation formée par la zone centrale et la zone périphérique,
* l'agitateur est disposé et commandé en mouvement en sorte de générer un mouvement vertical descendant dans le tube, le croisillon étant disposé entre le bas du guide-flux et le fond de la cuve,
* le tube a une extrémité basse située vis-à-vis du fond de la cuve à une distance comprise entre 1/3 et 2/3 de son diamètre,
* le tube a une extrémité haute située vis-à-vis du niveau de la surface du bain contenu dans la cuve d'une distance comprise entre 1/3 et 2/3 de son diamètre,
* la distance entre l'extrémité basse du tube et le fond de la cuve, et la distance entre l'extrémité haute du tube et le niveau du bain valent au moins approximativement 50% du diamètre du tube,
* le croisillon a une hauteur sensiblement égale à au moins 2/3 de la distance entre l'extrémité basse du tube et le fond de la cuve,
* le croisillon a une hauteur sensiblement égale à la distance entre l'extrémité basse du tube et le fond du tube,
* les parois verticales du croisillon s'étendent horizontalement sur une distance sensiblement comprise entre ¾ et 5/4 du rayon du tube, ce qui assure que la totalité, ou presque, du mélange floculé est réparti angulairement ; de manière préférée, les parois verticales du croisillon s'étendent horizontalement sur une distance sensiblement égale au rayon du tube guide-flux;
* le croisillon comporte quatre parois décalées de 90° autour de l'axe du tube guide-flux, ce qui correspond à une structure particulièrement simple (deux plaques se croisant à angle droit),
* deux des parois sont disposées transversalement à la direction suivant laquelle le fluide brut à traiter arrive dans la cuve de floculation, ce qui contribue à un bon partage de l'écoulement,
* des parois verticales divisent la zone périphérique, entre des zones d'entrée et de sortie, sur au moins une partie de la hauteur totale séparant le fond de la cuve et la surface du bain, ce qui contribue à garantir que le fluide brut à traiter passe au moins une fois par le tube guide-flux,
* ces parois verticales s'étendent sur une distance valant entre 40% et 60% de cette hauteur totale, ce qui est un bon compromis vis-à-vis de la hauteur, pour assurer une bonne efficacité, sans pour autant consommer trop de surface de cloison,
* le réacteur comporte au moins deux cloisons verticales s'étendant sensiblement sur la moitié supérieure de la cuve, entre le tube guide-flux et l'entrée de fluide et la sortie de fluide, respectivement, en sorte d'imposer au fluide à traiter de passer au moins une fois dans la zone centrale entre l'entrée de fluide et la sortie de fluide ; c'est en effet en partie haute, au niveau de l'entrée du tube guide-flux, que ces parois sont le plus efficaces,
* ces parois verticales s'étendent sur une hauteur comprise entre le niveau de l'entrée de fluide principal et le niveau de l'agitateur,
* les parois verticales s'étendent depuis la périphérie de la zone périphérique jusqu'au tube, ce qui assure un bon partitionnement de la zone périphérique,
* les zones d'entrée et de sortie sont disposées à proximité du niveau de la surface et sont munies chacune d'une plaque disposée transversalement en regard de l'entrée et de la sortie, respectivement, en sorte de former un siphon, ce qui contribue à assurer une arrivée régulière de fluide à traiter, et à éviter des mouvements intempestifs à la surface du bain,
* il comprend en outre une tubulure d'injection de réactif floculant, connectée à une source de réactif floculant,
* cette tubulure d'injection de réactif floculant est située entre l'entrée de fluide brut à traiter et l'entrée du tube guide-flux ; de manière préférée, ce réacteur comporte une tubulure annulaire d'injection de réactif floculant disposée co-axialement à l'entrée du tube guide-flux,
* il comprend en outre une tubulure d'injection de matériau pulvérulent, connecté à une source de matériau pulvérulent,
* cette source de matériau pulvérulent est une source de sable fin,
* la cuve comporte une seule zone comportant un tube, mais l'invention couvre aussi des cas où une même cuve comporte plusieurs zones de floculation juxaposées.

L'invention couvre également une installation pour le traitement d'un fluide, comportant un réacteur du type précité et une zone de séparation connectée à la sortie de la cuve de ce réacteur.

De manière préférée :
* ce réacteur comporte une tubulure d'injection de matériau pulvérulent, connectée à une source de matériau pulvérulent, et la zone de séparation comporte une sortie adaptée à recueillir des boues comportant des flocs et connectée à un dispositif de récupération de matériau pulvérulent, ladite source de matériau pulvérulent étant connectée à ce dispositif de récupération,
* la zone de séparation est un décanteur disposé en aval de la cuve,
* la zone de séparation est un décanteur disposé autour de la cuve.

Ainsi, selon une combinaison tout particulièrement intéressante selon l'invention, le tube guide-flux est disposé au dessus d'un croisillon, les deux dispositifs ayant avantageusement le même diamètre, au moins de façon approximative. Le sens de pompage préconisé est descendant afin de permettre l'introduction d'un ou plusieurs flux ou fluides secondaires en surface, assurant ainsi un contrôle permanent de leur injection. Les forts gradients de vitesse formés dans la partie basse de la cuve (production d'énergie cinétique turbulente) grâce au croisillon présentent l'avantage d'éviter la formation de zones de dépôt, alors même que l'homme de métier estimait devoir exclure de telles parois horizontales de fond pour éviter de telles zones de dépôt.

L'effet combiné de ces dispositifs conduit à convertir une partie majeure de la composante radiale de l'hélice de l'agitateur en composante axiale, augmentant ainsi significativement le débit de pompage pour la même puissance absorbée.

Diverses remarques méritent d'être formulées à propos d'exemples préférés de réalisation de l'invention :
- La présence de deux zones parfaitement délimitées et ayant des intensités de mélange radicalement différentes, permet de réaliser dans la même cuve les fonctions nécessitant habituellement deux cuves d'intensité de mélange différente.
- L'utilisation d'une seule cuve, comportant ces deux zones à intensités de mélange différentes, permet de réaliser les deux fonctions avec un seul agitateur au lieu de deux,
- A volume utile identique, le volume total de la cuve unique peut être significativement plus faible que celui des 2 cuves réunies, de par la réduction des zones mortes du à un meilleur contrôle de l'intensité de mélange et de son homogénéité,
- A efficacité de traitement égale, pour une même consommation de réactif et un même débit de pompage, la consommation énergétique peut être diminuée de par la conversion d'une partie importante du flux radial en flux axial,
- Dans les cuves de grande profondeur qui utilisent normalement plusieurs mobiles superposés, la présence du guide-flux associé à son croisillon permet d'obtenir le même effet hydraulique avec un seul mobile et une moindre puissance électrique, aussi bien par la suppression de la consommation propre des mobiles supplémentaires que par le gain en efficacité obtenu grâce à la nouvelle conception,
- Les cloisons verticales peuvent tout simplement être au nombre de deux, couvrir complètement l'espace compris entre le guide-flux et la cuve, et être disposées uniquement sur la moitié supérieure de la hauteur liquide ; dans ce cas elles sont donc plus larges et plus courtes que celles indiqués dans la littérature. En plan horizontal, elles sont parallèles aux parois d'entrée et donc de sortie.
- Les croisillons ont de préférence un diamètre égal à celui du guide-flux et une hauteur comprise entre le guide-flux et le fond de la cuve.
- Un gain optimum en performances peut être obtenu par le présent réacteur, fondé sur l'assemblage avantageux des guide-flux, cloisons de surface et croisillons, zones d'alimentation et de sortie, du positionnement de l'agitateur et du mode d'injection des fluides secondaires.

### IV - Description de l'invention

Des objets, caractéristiques et avantages de l'invention ressortent de la description qui suit, donnée à titre d'exemple illustratif non limitatif, en regard des dessins annexés sur lesquels :
- la figure 1 est un schéma de principe, en perspective, d'un réacteur selon un mode préféré de réalisation de l'invention,
- la figure 2 est un schéma de ce réacteur en vue de dessus,
- la figure 3 est un schéma de principe d'une installation de traitement d'eau, utilisant un réacteur selon les figures 1 et 2,
- la figure 4 est un schéma de principe en vue de dessus d'un autre réacteur, selon une variante du réacteur des figures 1 et 2,
- la figure 5 est un schéma de principe, en vue de dessus, d'encore un autre réacteur, selon encore une autre variante du réacteur des figures 1 et 2,
- la figure 6 est une vue schématique d'un exemple de réalisation d'une installation selon la figure 3, et
- la figure 7 est une vue schématique d'un autre exemple de réalisation d'une installation selon la figure 3.

### Forme du réacteur

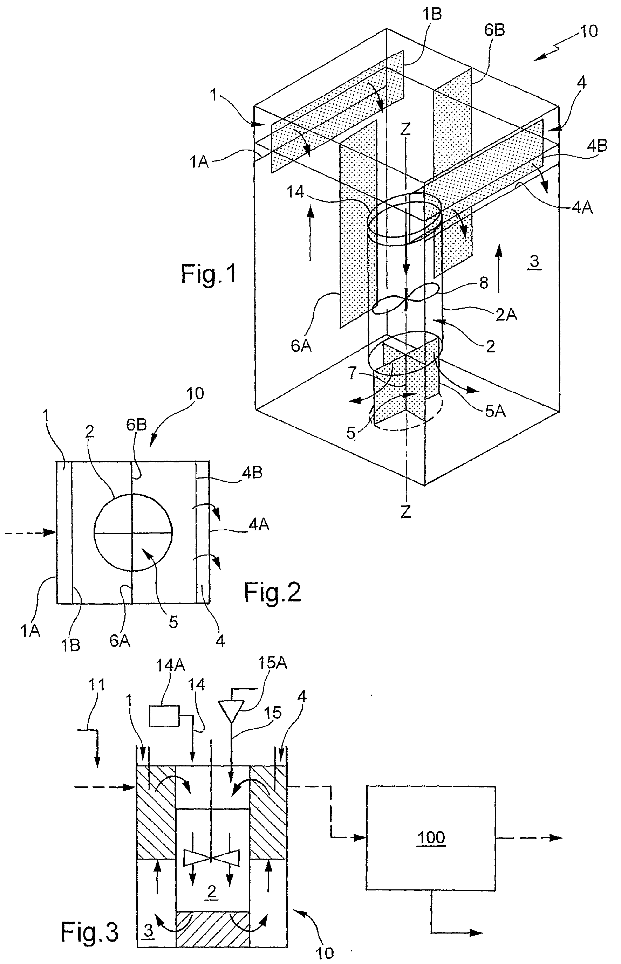

Le réacteur représenté aux figures 1 et 2 sous la référence 10 est de forme rectangulaire afin de faciliter la disposition en série de plusieurs réacteurs du même type. En variante non représentée, ce réacteur peut être carré, ce qui peut être favorable compte tenu de la symétrie qu'a la zone centrale (voir ci-dessus).

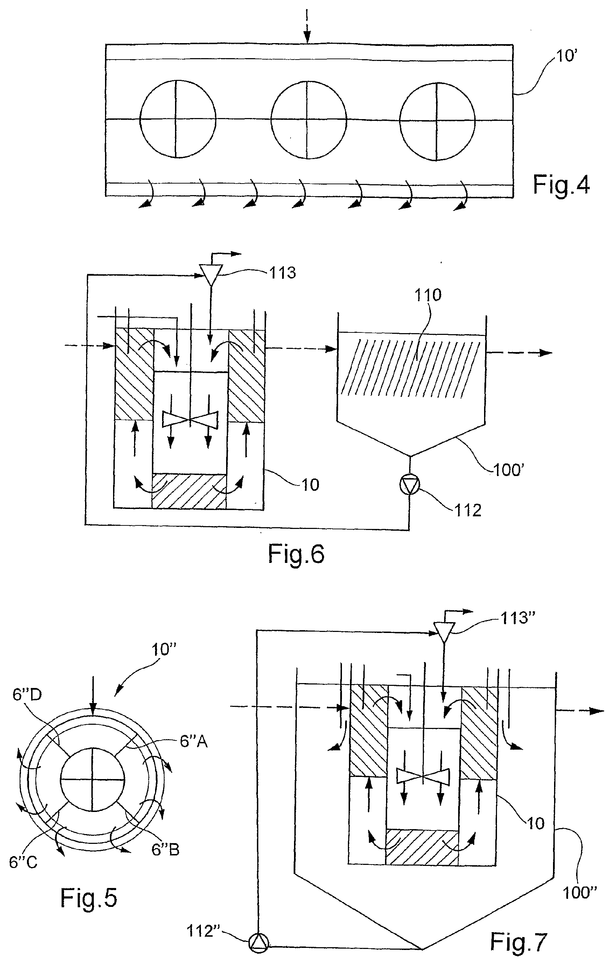

Il convient de noter que la plupart des dispositions décrites ci-après sont applicables également à des réacteurs circulaires (voir la figure 5), également couverts par l'invention, les résultats obtenus étant pratiquement identiques.

D'une manière générale, le réacteur 10 comporte, dans l'exemple préféré ici considéré :
- Une zone d'entrée de fluide 1 par laquelle arrive, souvent selon un écoulement turbulent, un fluide brut à traiter dans lequel un premier réactif peut avoir été injecté, tel qu'un réactif coagulant de tout type connu approprié,
- Une zone centrale 2, à l'intérieur d'un tube 2A servant de guide-flux, à forte énergie dissipée, générée par un agitateur 8, et où a lieu la dispersion ainsi que le mélange intégral du fluide brut à traiter avec au moins un réactif floculant ; dans le prolongement de ce tube est disposé un croisillon 5,
- Une zone périphérique 3 (à l'extérieur du guide-flux) à faible énergie où est parachevée la floculation désirée,
- Une zone de sortie de fluide 4 permettant avantageusement la dissipation de l'énergie de brassage et l'équi-répartition du fluide mélangé floculé, sortant ici sur toute la largeur de la cuve, afin de favoriser la séparation solide - liquide dans un éventuel réacteur aval de séparation.
- Un ensemble de cloisons verticales 6A et 6B formant des déflecteurs minimisant les by-passes entre l'entrée et la sortie et améliorant l'efficacité de mélange.

Afin de faciliter l'enchaînement (initial ou ultérieur) de plusieurs étapes de traitement basées sur ce même principe, l'entrée et la sortie de chaque réacteur sont disposées sensiblement à un même niveau, de préférence en partie supérieure, sensiblement au niveau de l'entrée du tube, ici en surface ; cette disposition permet par ailleurs de minimiser le by-pass dynamique et permet l'évacuation des flottants éventuels vers l'aval, par exemple par montée du niveau du bain au dessus des déversoirs que comporte la sortie de fluide, ou par modification de la position de ces déversoirs.

### Zone d'admission 1

Le fluide brut à traiter, aussi appelé effluent, est introduit dans chaque réacteur soit en surface (comme cela est représenté à la figure 1), réparti sur toute la largeur (par un déversoir 1A noyé ou non, en pratique formé par le bord inférieur de la fente définissant l'entrée dans la paroi du réacteur), soit (en variante non représentée) en sousverse, soit ponctuellement (à surface libre ou en charge).

D'une manière générale, l'introduction ponctuelle peut être choisie dans le cas d'un réacteur unique ou dans le cas du premier réacteur d'une série, la communication entre 2 réacteurs successifs étant réalisée préférentiellement par déversement.

Une cloison siphoïde 1B (ou plaque brise-jet, provoquant un effet siphon) peut délimiter la zone d'entrée ou d'admission vis-à-vis du reste du réacteur. Cette cloison siphoïde permet de dissiper l'énergie cinétique turbulente amont, essentiellement en cas d'entrée ponctuelle, ainsi que de changer la direction d'écoulement (verticale au lieu d'horizontale).

Un premier réactif, par exemple un coagulant (par exemple un sel minéral, tel qu'un sel de fer ou d'aluminium) peut être introduit dans cette zone de forte turbulence afin de faciliter sa dispersion. Les modalités d'introduction de ce réactif (ou d'éventuels autres réactifs) dépendent du mode d'introduction du fluide brut à traiter : injection ponctuelle ou multipoints sur toute la largeur de la zone d'admission.

### Zone centrale 2

Il s'agit de la zone de turbulence maximale située à l'intérieur du guide-flux où le mélange intime des différents composants est réalisé.

L'utilisation du guide-flux permet de n'utiliser qu'un seul agitateur 8 par arbre, indépendamment de la profondeur liquide.

Le tube a un axe z-z de symétrie, et a de préférence une section constante, avantageusement cylindrique, ici de forme circulaire (c'est-à-dire cylindrique au sens commun du terme), mais peut avoir d'autres formes, polygonales, par exemple.

Ce tube, complètement immergé dans le bain est de préférence vertical (z-z est donc vertical), même si des directions inclinées (ou même horizontales) sont possibles, si la configuration générale de l'ensemble du réacteur, y compris de ses entrée/sortie, le rend souhaitable.

Ainsi que cela est représenté à la figure 4, plusieurs agitateurs équipés de guide-flux peuvent être installés dans la même cuve, en fonction des besoins et si les dimensions longitudinale et transversale de celle-ci le permettent. Le choix du nombre d'agitateurs à disposer dans chacune des directions (longitudinale et transversale) dépend du rapport entre le diamètre des mobiles de ces agitateurs et les côtés correspondants, le diamètre maximum lui-même étant fonction de la hauteur du liquide.

De manière particulièrement avantageuse, cet agitateur est commandé en sorte de provoquer un écoulement vertical descendant.

Le débit pompé par l'ensemble des agitateurs, qui représente avantageusement 1 à 20 fois le débit traversier (entre l'entrée et la sortie), est aspiré en haut du tube 2A (ou gaine tubulaire) et refoulé vers le fond du réacteur, suivant donc un sens descendant. Cette disposition permet d'injecter le/ou les réactifs en surface, ponctuellement ou à travers un tube perforé annulaire, co-axial au tube, disposé à l'entrée supérieure de celui-ci, schématisé sous la référence 14. C'est par ce tube perforé qu'est ici injecté un réactif floculant, mais cette injection peut, en variante, être réalisée à l'entrée, entre l'entrée et la zone centrale, voire à l'entrée du tube.

L'agitateur 8 est avantageusement disposé à mi-hauteur dans le tube, et ce dernier a de préférence un diamètre compris entre 102 % et 120 % de celui de l'agitateur.

Le diamètre est avantageusement au plus égal à 60% et au moins égal à 40% de la plus grande dimension horizontale de la zone périphérique, de préférence de l'ordre de 50%. Le diamètre hydraulique de cette zone centrale est compris entre 40% et 60% du côté moyen de la cuve.

Son extrémité basse est avantageusement située vis-à-vis du fond à une distance comprise entre 1/3 et 2/3 du diamètre du tube, et il en est de même de la distance entre la surface et le niveau de l'extrémité supérieure du tube. Ces distances sont avantageusement de l'ordre de 50% du diamètre du tube.

Le croisillon 5 disposé sous le guide-flux est formé de plusieurs parois verticales 5A s'étendant à partir d'une arête commune 7 sensiblement située dans le prolongement de l'axe Z-Z de l'agitateur. C'est un dispositif statique qui s'oppose au maintien de la rotation de l'écoulement sortant du tube guide-flux ; il permet de canaliser l'écoulement, de le diviser angulairement en plusieurs parties égales et empêchera la formation d'un courant circulaire au fond de l'appareil. La suppression de l'effet radial qui en est la cause conduit parallèlement à l'accroissement de l'effet axial donc du débit de pompage sans augmentation de la puissance consommée. Cela évite aussi qu'il y ait accumulation de particules dans les coins formés par le croisillon.

Le croisillon a avantageusement un diamètre compris entre 75% et 125% du diamètre du tube. Ses parois s'étendent sur une fraction substantielle (au moins les 2/3) de la hauteur entre le fond de la cuve et la sortie du tube, de préférence sur sensiblement la totalité de cette hauteur.

Le croisillon est ici formé de quatre parois se raccordant à angle droit (donc à 90°) dont deux sont de préférence disposées transversalement au sens d'écoulement entre entrée et sortie de la cuve. En variante non représentée, ce croisillon peut comporter un nombre différent de cloisons, trois seulement ou au contraire, cinq cloisons voire plus.

### Zone périphérique 3

Située à l'extérieur du tube guide-flux, elle est caractérisée par le mouvement ascensionnel du liquide pompé (bien mélangé mais seulement en cours de floculation), de faibles vitesse et turbulence, ainsi qu'une une forte homogénéité, ce qui permet d'accomplir le processus souhaité pendant une durée minimisée.

La disposition des cloisons 6A et 6B (déflecteurs, ou « baffles » en anglais) en surface, transversalement au flux traversier, conduit à la suppression du mouvement rotationnel formé en surface ainsi qu'au cheminement préférentiel de la totalité du fluide entrant vers le tube guide-flux, garantissant que le fluide brut à traiter passe au moins une fois dans ce tube afin d'être mélangé avec le flux recirculé et les réactifs injectés.

Ces cloisons verticales s'étendent sur une partie seulement de la hauteur de la zone centrale, donc de la hauteur du bain, de préférence sur 40% à 60% de celle-ci, avantageusement sur une moitié supérieure du bain (surtout lorsque, comme dans le cas représenté, les entrée et sortie sont en partie haute). Elles s'étendent avantageusement entre la surface et le niveau auquel est disposé l'agitateur dans le tube.

En variante non représentée, ces parois peuvent être plus nombreuses, par exemple au nombre de trois (voire de quatre (ou même plus)) parois disposées, réparties angulairement de façon régulière ou non entre l'entrée et la sortie.

### Zone de sortie 4

Cette zone est située à l'opposée de la zone d'entrée, de préférence à la même hauteur et elle comporte avantageusement une cloison siphoïde 4B et un déversoir 4A noyé couvrant en général toute la largeur du réacteur.

Disposés à une distance optimale et à une profondeur d'immersion appropriée, ces dispositifs permettent, par l'adoption d'une vitesse ascensionnelle appropriée, de minimiser le by-pass et de dissiper les turbulences défavorables au traitement en aval du réacteur (par exemple lorsqu'une séparation de phase est souhaitée).

Un partitionnement approprié de l'espace compris entre la cloison siphoïde et la paroi aval (non représenté) permet d'assurer un débit également distribué sur toute la longueur du déversoir.

### Configurations spécifiques

Le réacteur des figures 1 et 2 est avantageusement suivi d'une zone de séparation. Diverses configurations d'utilisation sont possibles.

La figure 3 représente le réacteur 10 suivi d'une telle zone de séparation schématisée sous la référence 100.

Il faut bien comprendre que, selon les besoins, il est possible de monter en série plusieurs réacteurs tels que celui des figures 1 et 2.

Sur cette figure 3, l'entrée se fait par la gauche, après une éventuelle ligne 11 d'injection de réactif coagulant, dans une zone représentée en grisé, schématisant la portion de la zone périphérique où se fait l'écoulement ascendant est confiné angulairement par les cloisons 6A et 6B et où se fait le mélange avec le fluide brut à traiter qui arrive. Dans la zone claire centrale est schématisée, sous la référence 14 l'injection de réactif floculant (à partir d'une source de floculant 14A), et sous la référence 15 l'injection d'un éventuel matériau pulvérulent (à partir d'une source 15A de matériau granulaire). Après floculation, du fluide sortant de la portion droite de la zone périphérique qui est représentée en grisé sort et rentre dans la zone de séparation. Dans cette zone de séparation, le fluide floculé est séparé en un effluent clarifié et des boues contenant les flocs formés dans le réacteur 10.

Le fluide brut à traiter est de préférence de l'eau, et cette eau est en principe pré-coagulée par injection, par la ligne 11 ou dans une cuve amont, d'un réactif coagulant tel qu'un sel de fer ou d'aluminium. L'alimentation dans la cuve s'effectue en surverse ou sousverse.

De manière avantageuse, le matériau pulvérulent est injecté pour favoriser la formation de flocs à partir des impuretés, en suspension, colloïdales ou dissoutes contenues dans le fluide brut à traiter. Ce matériau est de préférence un ballast constitué d'un matériau granulaire insoluble (ou très peu soluble) dans l'eau et plus lourd que le fluide brut à traiter. De manière préférée, ce matériau est du sable, de granulométrie avantageusement comprise entre 20 et 300 microns.

La figure 4 représente un autre réacteur 10' comportant, dans une même cuve, non plus un, mais trois tubes guide-flux combinés à un dispositif statique tel que le croisillon des figures 1 et 2. En désignant par « zone de floculation » la zone formée conjointement par chaque zone centrale définie par un tube et la zone périphérique qui l'entoure, on peut donc dire que le réacteur de la figure 4 comporte plusieurs zones de floculation, disposées en parallèle entre l'entrée (en haut, sur le dessin) et la sortie (en bas, sur ce même dessin).

La figure 5 représente un autre réacteur, 10", similaire à celui des figures 1 et 2, à ceci près que la paroi de la cuve est cylindrique, et que du fluide floculé sort de cette cuve par surverse sur une fraction importante de sa périphérie. Les cloisons latérales de déflection sont ici au nombre de 4, repérées 6"A à 6"D, délimitant en partie supérieure de la zone périphérique quatre quartiers dont l'un (celui situé en haut sur le dessin) est réservé à l'entrée du fluide brut à traiter, et les trois autres permettent une sortie de fluide floculé.

De manière générale, les flocs formés du fait du mélange intensif grossissent dans la zone périphérique, moins agitée, avec recyclage partiel dans le guide flux avant envoi final vers la zone de décantation.

Dans l'exemple de réalisation de la figure 6, la zone de décantation est une cuve de séparation 100' indépendante du réacteur de floculation 10 ; par ailleurs, cette cuve comporte des organes d'aide à la décantation schématisés sous la référence 110, et ici constitués par des lamelles inclinées (en variante, ces organes sont omis) ; enfin, les boues, séparées de l'effluent clarifié sortant en pratique par souverse de la cuve de séparation, sont ici pompées par une pompe 112 connectée par une ligne à un élément 113, en pratique un hydrocyclone ou tout autre système capable d'assurer la séparation, capable de récupérer une partie significative du matériau granulaire contenu dans ces boues, auquel cas cet élément 113 fait partie de la source de matériau pulvérulent (bien entendu le matériau injecté dans le réacteur de floculation est en partie constitué par ce matériau récupéré, en partie constitué par du matériau neuf).

Ce matériau pulvérulent formant ballast est complètement inerte (tel du sable, du grenat, etc...), ou un matériau actif (tel du charbon actif en poudre, ou de la résine), ce qui explique qu'on le mentionne parfois parmi les « réactifs » de traitement des eaux même lorsqu'il s'agit de sable. Comme indiqué ci-dessus, il peut être injecté, soit en entrée avec le fluide pré-coagulé, soit dans la zone amont du mobile d'agitation, préférentiellement en haut d'un guide flux coaxial à ce mobile. L'injection d'un ballast permet de réaliser en une seule cuve à deux zones efficaces, par exemple, le traitement de floculation ballastée préconisé par les brevets Français FR 2627704 et FR 2719234 correspondant à un procédé parfois appelé « Actiflo » avec, ou sans lamelles), diminuant ainsi le coût global de réalisation, tout en minimisant les besoins en énergie d'agitation. Le croisillon préconisé dans la présente invention permet également, d'après les essais réalisés par la déposante et contrairement à ce qu'aurait pu prévoir l'homme de métier, de minimiser, grâce à une meilleure efficacité de l'agitation, les dépôts de sable de ballast au fond de la cuve d'agitation.

La figure 7 représente une autre installation de traitement de fluide brut à traiter, typiquement de traitement d'eau. Cette installation se distingue essentiellement de celle de la figure 6 par le fait que la zone de séparation est ici une cuve 100" qui est non plus en aval, mais autour de la cuve de floculation 10 ; la configuration du réacteur 10 est la même qu'à la figure 6, et l'injection de matériau pulvérulent utilise, comme à la figure 6, du matériau récupéré dans les boues pompées au fond de cette cuve 100". Dans cet exemple, il n'y a pas d'organe d'aide à la décantation, tels que des lamelles mais il peut y en avoir.

En variante non représentée, la zone de séparation met en oeuvre, non pas une décantation (ou l'effluent clarifié est plus léger que les boues rejetées) mais un principe de flottation, ou les rébus flottent à la surface de l'effluent clarifié ; il peut là aussi y avoir des organes d'aide à la séparation.

L'entrée du fluide floculé dans la zone de séparation peut aussi être avantageusement tangentielle en sorte de bénéficier d'un effet vortex s'ajoutant à l'effet de décantation.

### Etude comparative de la nouvelle configuration par rapport à la configuration classique par modélisation

Une évaluation des avantages de l'invention a été réalisée grâce à l'étude des champs de vitesse, du gradient turbulent et des distributions de temps de séjour, à l'aide du logiciel de simulation de mécanique des fluides Fluent (v.5, Fluent Inc.).

Deux configurations ont été étudiées sur la base des mêmes conditions opératoires, qui se différentient comme indiqué comme suit :

### 1-Mise en avant de l'avantage d'une entrée/sortie en surface, de l'utilisation d'un arbre de rotation plus court et d'un croisillon.

Le tableau 1 montre les avantages obtenus en passant d'une configuration A classique, avec entrée et sortie de l'effluent par sous et/ou surverse, et une configuration B conforme à certains aspects de l'invention, à savoir, entrée et sortie à même hauteur, présence d'une plaque brise-jet et d'une cloison siphoïde, arbre de rotation plus court et croisillon placé au fond de la cuve ; on observe que les valeurs maximales et moyennes des champs de vitesse et du gradient turbulent sont plus importantes et plus homogènes avec la nouvelle configuration B.

Intérêt de la nouvelle configuration :
- augmentation de l'efficacité de mélange à même consommation énergétique ;
- exploitation maximale du volume de la cuve ;
- réduction du by-pass ;
- facilite l'aménagement en série ;
- élimination des problèmes de vibration de l'arbre de rotation par réduction de sa longueur ;
- réduction du temps de séjour
- élimination du risque de chemin préférentiel dans la cuve par la création d'une zone de dissipation de l'énergie cinétique en sortie ;

### 2-Mise en avant du de l'avantage du couplage croisillon, guide-flux et chicanes

Le tableau 2 montre les avantages qu'il y a à passer, en fonctionnement continu, d'une configuration C classique avec un simple agitateur à une configuration D avec une cuve munie d'un mobile, d'un croisillon, d'un guide-flux reposant sur le croisillon et de deux chicanes soutenant le guide-flux.

L'analyse des champs de vitesse et de gradient turbulent à l'aide du logiciel de simulation de mécanique des fluides Fluent montre que pour les mêmes conditions opératoires :
- Les valeurs maximales et moyennes des champs de vitesse et du gradient turbulent sont plus importantes et plus homogènes avec la nouvelle configuration D.
- Il se crée deux zones bien distinctes : une zone fortement agitée avec des niveaux de vitesse et de gradient de vitesse très importants à l'intérieur du guide-flux et au niveau des croisillons. Et une zone plus faiblement agitée en dehors du guide flux.

Intérêt de la nouvelle configuration :
- augmentation de l'efficacité de mélange à même consommation énergétique ;
- création de deux zones de mélange distinctes en terme de niveau de mélange. Cela permettrait d'assurer un mélange rapide et efficace d'un réactif et du fluide dans la zone fortement agitée, et un temps de circulation optimal dans la zone la moins agitée pour l'action du réactif.
- création d'une zone fortement agitée aux niveaux des croisillons. Cela permettra de remettre en suspension des particules solides ayant décantées, ou d'augmenter l'aire interfaciale dans le cas d'un écoulement gaz-liquide.
- réduction du by-pass.
- réduction du temps de séjour.

### 3-Mise en avant de l'avantage du rajout du réactif par injection toroïdale autour du guide-flux (référence 14 de la figure 3)

Une simulation graphique de la distribution d'un réactif montre que la dispersion est meilleure et plus rapide avec une injection annulaire qu'avec une injection ponctuelle.

**TABLEAU 1**

| Paramètres | Ratio A vers B | Gain pour B |
|---|---|---|
| Temps de séjour/ Temps moyen de séjour | 0.9 | +9% |
| Temps de mélange/ Temps moyen de séjour | 0.79 | +**20**% |
| Taux de mélange à 1 minute | 0.62 | **+40%** |
| Vitesse moyenne (m/s) | 0.42 | **+60%** |
| Gradient turbulent moyen (s⁻¹) | 0.21 | **+80%** |

**TABLEAU 2**

| Paramètres | Ratio C vers D | Gain pour D |
|---|---|---|
| Temps de séjour/ Temps moyen de séjour | 0.956 | +4% |
| Temps de mélange/ Temps moyen de séjour | 0.861 | **+14%** |
| Taux de mélange à 15 minutes | 1 | 0% |
| Vitesse moyenne (m.s⁻¹) | 0.17 | **+83%** |
| Gradient turbulent moyen (s⁻¹) | 0.044 | **+96%** |

## Revendications

1. Procédé de traitement par floculation et séparation d'un fluide brut à traiter chargé en impuretés en suspension, colloïdales ou dissoutes, selon lequel :
- on fait circuler le fluide brut à traiter avec un réactif floculant dans une cuve de floculation en sorte d'obtenir un mélange floculé dans lequel les impuretés forment des flocs,
- on fait circuler ce mélange floculé dans une zone de séparation où l'on sépare ce mélange floculé en un effluent clarifié et des boues comportant ces flocs,
**caractérisé en ce que** :
* on délimite dans la cuve de floculation, au moyen d'un tube guide-flux complètement immergé, une zone centrale dans laquelle on provoque, par agitation (8), un écoulement axial turbulent du mélange du fluide brut à traiter et du floculant dans une direction axiale de ce tube guide-flux,
* on répartit (5) angulairement cet écoulement, au moyen d'un dispositif statique s'opposant à la rotation de cet écoulement et disposé à la sortie de ce tube guide-flux,
* on laisse circuler ce mélange dans une zone périphérique (3) entourant cette zone centrale, dans un sens opposé, jusqu'à l'entrée de la zone centrale, et
* on fait passer une fraction de ce mélange vers la zone de séparation.

2. Procédé selon la revendication 1, **caractérisé en ce que** l'on maintient l'écoulement dans la zone centrale à un débit valant entre 1 et 20 fois le débit d'entrée du fluide brut à traiter.

3. Procédé selon la revendication 1 ou la revendication 2, **caractérisé en ce que** l'on divise la zone périphérique en au moins une zone périphérique amont communiquant avec l'entrée du fluide brut à traiter dans la cuve de floculation, et une zone périphérique aval communiquant avec la sortie du mélange floculé, en sorte d'imposer au fluide brut à traiter qui entre dans la cuve de floculation de passer au moins une fois dans la zone centrale avant de passer vers la zone de séparation.

4. Procédé selon l'une quelconque des revendications 1 à 3, **caractérisé en ce qu'**on provoque l'écoulement axial turbulent du mélange selon une direction verticale.

5. Procédé selon la revendication 4, **caractérisé en ce que** l'on provoque l'écoulement axial turbulent vertical par agitation (8) à mi-hauteur de la zone centrale.

6. Procédé selon la revendication 5, **caractérisé en ce que** l'on provoque l'écoulement axial turbulent du mélange dans un mouvement descendant, et on répartit angulairement le mélange sensiblement sur au moins les deux tiers de la hauteur entre le niveau de sortie de la zone centrale et le niveau du fond de la cuve de floculation.

7. Procédé selon la revendication 6, **caractérisé en ce qu'**on répartit angulairement le mélange sensiblement toute la hauteur entre le niveau de la zone centrale et le niveau du fond de la cuve de floculation.

8. Procédé selon la revendication 6 ou la revendication 7, **caractérisé en ce qu'**on dispose le tube guide-flux délimitant la zone centrale de telle manière que son extrémité basse formant sortie est située vis-à-vis du fond de la cuve de floculation à une distance comprise entre 1/3 et 2/3 de la largeur moyenne de ce tube.

9. Procédé selon la revendication 8, **caractérisé en ce qu'**on dispose le tube guide-flux délimitant la zone centrale de telle manière que son extrémité haute formant entrée est située vis-à-vis du niveau de la surface libre du contenu de la cuve de floculation à une distance comprise entre 1/3 et 2/3 de la largeur moyenne de ce tube.

10. Procédé selon l'une quelconque des revendications 6 à 9, **caractérisé en ce qu'**on divise cette zone périphérique sur une partie supérieure de sa hauteur en au moins une zone périphérique amont communiquant avec l'entrée du fluide brut à traiter dans la cuve de floculation, et une zone périphérique aval communiquant avec la sortie du mélange floculé, en sorte d'imposer au fluide brut à traiter qui entre dans la cuve de floculation de passer au moins une fois dans la zone centrale avant de passer vers la zone de séparation.

11. Procédé selon la revendication 10, **caractérisé en ce qu'**on réalise cette division sur sensiblement la moitié supérieure de cette hauteur.

12. Procédé selon l'une quelconque des revendications 4 à 11, **caractérisé en ce que** l'on fait entrer le fluide brut à traiter et on fait sortir du mélange floculé sensiblement au niveau de la zone d'entrée du tube guide-flux.

13. Procédé selon l'une quelconque des revendications 1 à 12, **caractérisé en ce que** le floculant est un polymère naturel, minéral ou de synthèse.

14. Procédé selon l'une quelconque des revendications 1 à 13, **caractérisé en ce que** le réactif floculant avec lequel on mélange le fluide brut à traiter dans la cuve de floculation a été introduit dans le fluide à traiter en amont de cette cuve.

15. Procédé selon l'une quelconque des revendications 1 à 13, **caractérisé en ce que** le réactif floculant avec lequel on mélange le fluide brut à traiter est introduit dans la cuve de floculation.

16. Procédé selon la revendication 15, **caractérisé en ce que** le réactif floculant est introduit entre l'entrée de la cuve de floculation et l'entrée du tube guide-flux.

17. Procédé selon la revendication 15, **caractérisé en ce que** le réactif floculant est introduit dans la zone centrale.

18. Procédé selon la revendication 15, **caractérisé en ce que** le réactif floculant est introduit en limite de la zone centrale.

19. Procédé selon la revendication 18, **caractérisé en ce que** l'on injecte au moins une fraction du réactif floculant de façon annulaire à la périphérie de l'entrée de la zone centrale, co-axialement au tube guide-flux.

20. Procédé selon l'une quelconque des revendications 1 à 19, **caractérisé en ce qu'**on mélange en outre au fluide brut à traiter, dans la cuve de floculation, un matériau pulvérulent.

21. Procédé selon la revendication 20, **caractérisé en ce que** le matériau pulvérulent est un ballast constitué d'un matériau granulaire insoluble plus lourd que le fluide brut à traiter.

22. Procédé selon la revendication 21, **caractérisé en ce que** le ballast est constitué d'un sable fin de granulométrie comprise entre 20 et 300 microns.

23. Procédé selon la revendication 21 ou la revendication 22, **caractérisé en ce qu'**on traite les boues obtenues en sortie de la zone de séparation, on y récupère du ballast que l'on recycle dans la cuve de floculation.

24. Procédé selon l'une quelconque des revendications 1 à 23, **caractérisé en ce que** le fluide brut à traiter a été, préalablement à son introduction dans la cuve de floculation, mélangé avec un coagulant.

25. Procédé selon l'une quelconque des revendications 1 à 24, **caractérisé en ce que** fluide principal est de l'eau à traiter.

26. Procédé selon la revendication 25, **caractérisé en ce que** l'eau à traiter a été, préalablement à son introduction dans la cuve de floculation, mélangée avec un coagulant comportant un sel minéral, tel qu'un sel de fer ou d'aluminium.

27. Procédé selon l'une quelconque des revendications 1 à 26, **caractérisé en ce que** la séparation est réalisée par décantation.

28. Procédé selon l'une quelconque des revendications 1 à 26, **caractérisé en ce que** la séparation est réalisée par flottation.

29. Procédé selon la revendication 27 ou la revendication 28, **caractérisé en ce que** la séparation est réalisée à l'aide d'organes d'aide à la séparation tels que des plaques, des lamelles, ou des tubes inclinés ou verticaux.

30. Procédé selon l'une quelconque des revendications 27 à 29, **caractérisé en ce que** le mélange floculé est introduit de manière tangentielle dans la zone de séparation en sorte d'ajouter un effet vortex s'ajoutant à l'effet de décantation.

31. Réacteur destiné au traitement par floculation d'un fluide brut à traiter chargé en impuretés en suspension, colloïdales ou dissoutes, comportant une cuve (10,10', 10") munie d'au moins une entrée de fluide et d'au moins une sortie de fluide et au moins une zone de floculation au sein d'un bain où le fluide à traiter est mélangé à un floculant, comportant :
- un tube guide-flux (2A), ouvert à ses deux extrémités et disposé verticalement en sorte d'être complètement immergé dans le bain de la cuve tout en restant à distance du fond de cette cuve, délimitant une zone centrale (2) vis-à-vis d'une zone périphérique (3), ces zones centrale et périphérique communiquant l'une avec l'autre aux deux extrémités de ce tube, la zone périphérique communiquant avec l'entrée et la sortie de fluide
- un agitateur (8) à arbre vertical disposé dans ce tube en sorte d'y générer un mouvement axial turbulent selon une direction verticale,
- un croisillon (5) formé de plusieurs parois verticales s'étendant horizontalement à partir d'une arête (7) commune sensiblement située dans le prolongement de l'axe de l'agitateur, en aval de celui-ci, en sorte de répartir angulairement l'écoulement sortant du tube vers la zone périphérique.

32. Réacteur selon la revendication 31, **caractérisé en ce que** le tube guide-flux a une section constante.

33. Réacteur selon la revendication 32, **caractérisé en ce que** le tube guide-flux a une forme cylindrique.

34. Réacteur selon l'une quelconque des revendications 31 à 33, **caractérisé en ce que** l'agitateur est disposé sensiblement à mi-hauteur dans le tube.

35. Réacteur selon l'une quelconque des revendications 31 à 34, **caractérisé en ce que** le tube guide-flux a un diamètre compris entre 102% et 120% du diamètre de l'agitateur.

36. Réacteur selon l'une quelconque des revendications 31 à 35, **caractérisé en ce que** le diamètre hydraulique de la zone centrale est compris entre 40% et 60% de la largeur moyenne de la zone de floculation formée par la zone centrale et la zone périphérique.

37. Réacteur selon l'une quelconque des revendications 31 à 36, **caractérisé en ce que** l'agitateur est disposé et commandé en mouvement en sorte de générer un mouvement vertical descendant dans le tube, le croisillon étant disposé entre le bas du guide-flux et le fond de la cuve.

38. Réacteur selon la revendication 37, **caractérisé en ce que** le tube a une extrémité basse située vis-à-vis du fond de la cuve à une distance comprise entre 1/3 et 2/3 de son diamètre.

39. Réacteur selon la revendication 38, **caractérisé en ce que** le tube a une extrémité haute située vis-à-vis du niveau de la surface du bain contenu dans la cuve d'une distance comprise entre 1/3 et 2/3 de son diamètre.

40. Réacteur selon l'une quelconque des revendications 37 à 39, **caractérisé en ce que** la distance entre l'extrémité basse du tube et le fond de la cuve, et la distance entre l'extrémité haute du tube et le niveau du bain valent au moins approximativement 50% du diamètre du tube.

41. Réacteur selon l'une quelconque des revendications 37 à 40, **caractérisé en ce que** le croisillon a une hauteur sensiblement égale à au moins 2/3 de la distance entre l'extrémité basse du tube et le fond de la cuve.

42. Réacteur selon la revendication 41, **caractérisé en ce que** le croisillon a une hauteur sensiblement égale à la distance entre l'extrémité basse du tube et le fond du tube.

43. Réacteur selon l'une quelconque des revendications 37 à 42, **caractérisé en ce que** les parois verticales du croisillon s'étendent horizontalement sur une distance sensiblement comprise entre ¾ et 5/4 du rayon du tube.

44. Réacteur selon la revendication 43, **caractérisé en ce que** les parois verticales du croisillon s'étendent horizontalement sur une distance sensiblement égale au rayon du tube guide-flux.

45. Réacteur selon l'une quelconque des revendications 37 à 44, **caractérisé en ce que** le croisillon comporte quatre parois décalées de 90° autour de l'axe du tube guide-flux.

46. Réacteur selon la revendication 45, **caractérisé en ce que** deux des parois sont disposées transversalement à la direction suivant laquelle le fluide brut à traiter arrive dans la cuve de floculation.

47. Réacteur selon l'une quelconque des revendications 37 à 46, **caractérisé en ce que** des parois verticales divisent la zone périphérique, entre des zones d'entrée et de sortie, sur au moins une partie de la hauteur totale séparant le fond de la cuve et la surface du bain.

48. Réacteur selon la revendication 47, **caractérisé en ce que** ces parois verticales s'étendent sur une distance verticale valant entre 40% et 60% de cette hauteur totale.

49. Réacteur selon la revendication 47 ou la revendication 48, **caractérisé en ce que** le réacteur comporte au moins deux cloisons verticales s'étendant sensiblement sur la moitié supérieure de la cuve, entre le tube guide-flux et l'entrée de fluide et la sortie de fluide, respectivement, en sorte d'imposer au fluide à traiter de passer au moins une fois dans la zone centrale entre l'entrée de fluide et la sortie de fluide.

50. Réacteur selon l'une quelconque des revendications 47 à 49, **caractérisé en ce que** ces parois verticales s'étendent sur une hauteur comprise entre le niveau de l'entrée de fluide principal et le niveau de l'agitateur.

51. Réacteur selon l'une quelconque des revendications 47 à 50, **caractérisé en ce que** les parois verticales s'étendent depuis la périphérie de la zone périphérique jusqu'au tube.

52. Réacteur selon l'une quelconque des revendications 37 à 51, **caractérisé en ce que** les zones d'entrée et de sortie sont disposées à proximité du niveau de la surface et sont munies chacune d'une plaque disposée transversalement en regard de l'entrée et de la sortie, respectivement, en sorte de former un siphon.

53. Réacteur selon l'une quelconque des revendications 31 à 52, **caractérisé en ce qu'**il comprend en outre une tubulure d'injection de réactif floculant, connectée à une source de réactif floculant.

54. Réacteur selon la revendication 53, **caractérisé en ce que** cette tubulure d'injection de réactif floculant est située entre l'entrée de fluide brut à traiter et l'entrée du tube guide-flux.

55. Réacteur selon la revendication 53, **caractérisé en ce qu'**il comporte une tubulure annulaire d'injection de réactif floculant disposée co-axialement à l'entrée du tube guide-flux.

56. Réacteur selon l'une quelconque des revendications 31 à 55, **caractérisé en ce qu'**il comprend en outre une tubulure d'injection de matériau pulvérulent, connecté à une source de matériau pulvérulent.

57. Réacteur selon la revendication 56, **caractérisé en ce que** cette source de matériau pulvérulent est une source de sable fin.

58. Réacteur selon l'une quelconque des revendications 31 à 57, **caractérisé en ce que** la cuve comporte une seule zone de floculation, comportant un tube guide-flux.

59. Installation de traitement de fluide comportant un réacteur selon l'une quelconque des revendications 31 à 57 et une zone de séparation connectée à la sortie de la cuve du réacteur.

60. Installation selon la revendication 59, **caractérisée en ce que** le réacteur comprend une tubulure d'injection de matériau pulvérulent, connectée à une source de matériau pulvérulent, et la zone de séparation comporte une sortie adaptée à recueillir des boues comportant des flocs et connectée à un dispositif de récupération de matériau pulvérulent, ladite source de matériau pulvérulent étant connectée à ce dispositif de récupération.

61. Installation selon la revendication 59 ou la revendication 60, **caractérisée en ce que** la zone de séparation est un décanteur disposé en aval de la cuve.

62. Installation selon l'une quelconque des revendications 59 à 61, **caractérisée en ce que** la zone de séparation est un décanteur qui est disposé autour de la cuve.

## Patentansprüche

1. Verfahren zur Flockungsbehandlung und Trennung eines aufzubereitenden Rohfluids, das mit kolloidalen oder gelösten, suspendierten Verunreinigungen beladen ist, wobei:
- das aufzubereitende Rohfluid mit einem Flockungsmittel in einem Flockungsbecken umgewälzt wird, so dass ein Flockungsgemisch erhalten wird, bei dem die Verunreinigungen Flocken bilden,
- dieses Flockungsgemisch in einem Trennungsbereich umgewälzt wird, wo dieses Flockungsgemisch in geklärtes Abwasser und in Schlamm, der diese Flocken enthält, getrennt wird,
**dadurch gekennzeichnet, dass**
* in dem Flockungsbecken mittels eines vollständig eingetauchten Strömungsleitrohrs ein mittlerer Bereich eingegrenzt wird, in welchem durch Rühren (8) eine axiale, turbulente Strömung des Gemischs aus aufzubereitendem Rohfluid und Flockungsmittel in einer axialen Richtung dieses Strömungsleitrohrs hervorgerufen wird,
* diese Strömung mittels einer statischen Vorrichtung winklig verteilt wird (5), die der Rotation dieser Strömung entgegengesetzt und am Auslass dieses Strömungsleitrohrs angeordnet ist,
* dieses Gemisch in einem diesen mittleren Bereich umgebenden Umfangsbereich (3) in einer entgegengesetzten Richtung bis zum Einlass in den mittleren Bereich umgewälzt wird, und
* ein Teil dieses Gemischs zum Trennungsbereich geführt wird.

2. Verfahren nach Anspruch 1, **dadurch gekennzeichnet, dass** die Strömung in dem mittleren Bereich mit einem Durchsatz gehalten wird, der zwischen 1 und 20 mal so hoch wie die Zuflussmenge des aufzubereitenden Rohfluids ist.

3. Verfahren nach Anspruch 1 oder Anspruch 2, **dadurch gekennzeichnet, dass** der Umfangsbereich in zumindest einen vorgelagerten Umfangsbereich, der mit dem Einlass des aufzubereitenden Rohfluids in das Flockungsbecken kommuniziert, und einen nachgelagerten Umfangsbereich unterteilt wird, der mit dem Auslass des Flockungsgemischs kommuniziert, so dass das aufzubereitende Rohfluid, das in das Flockungsbecken einströmt, dazu gezwungen wird, zumindest einmal in den mittleren Bereich zu strömen, bevor es in den Trennungsbereich strömt.

4. Verfahren nach einem der Ansprüche 1 bis 3, **dadurch gekennzeichnet, dass** die axiale, turbulente Strömung des Gemischs in einer vertikalen Richtung hervorgerufen wird.

5. Verfahren nach Anspruch 4, **dadurch gekennzeichnet, dass** die axiale, turbulente, vertikale Strömung durch Rühren (8) auf halber Höhe des mittleren Bereichs hervorgerufen wird.

6. Verfahren nach Anspruch 5, **dadurch gekennzeichnet, dass** die axiale, turbulente Strömung des Gemischs mit einer Abwärtsbewegung hervorgerufen wird und das Gemisch im Wesentlichen über zumindest zwei Drittel der Höhe zwischen dem Auslassniveau des mittleren Bereichs und dem Niveau des Bodens des Flockungsbeckens winkelig verteilt wird.

7. Verfahren nach Anspruch 6, **dadurch gekennzeichnet, dass** das Gemisch im Wesentlichen über die gesamte Höhe zwischen dem Niveau des mittleren Bereichs und dem Niveau des Bodens des Flockungsbeckens winkelig verteilt wird.

8. Verfahren nach Anspruch 6 oder nach Anspruch 7, **dadurch gekennzeichnet, dass** das den mittleren Bereich eingrenzende Strömungsleitrohr so angeordnet wird, dass dessen unteres Ende, das den Auslass bildet, dem Boden des Flockungsbeckens mit einem Abstand gegenüberliegt, der zwischen 1/3 und 2/3 der mittleren Breite dieses Rohrs entspricht.

9. Verfahren nach Anspruch 8, **dadurch gekennzeichnet, dass** das den mittleren Bereich eingrenzende Strömungsleitrohr so angeordnet wird, dass dessen oberes Ende, das den Einlass bildet, der Niveauhöhe der freien Oberfläche des Inhalts des Flockungsbeckens mit einem Abstand gegenüberliegt, der zwischen 1/3 und 2/3 der mittleren Breite dieses Rohrs entspricht.

10. Verfahren nach einem der Ansprüche 6 bis 9, **dadurch gekennzeichnet, dass** dieser Umfangsbereich in einem oberen Teilstück seiner Höhe in zumindest einen vorgelagerten Umfangsbereich, der mit dem Einlass des aufzubereitenden Rohfluids in das Flockungsbecken kommuniziert, und einen nachgelagerten Umfangsbereich unterteilt wird, der mit dem Auslass des Flockungsgemischs kommuniziert, so dass das aufzubereitende Rohfluid, das in das Flockungsbecken einströmt, dazu gezwungen wird, zumindest einmal in den mittleren Bereich zu strömen, bevor es zum Trennungsbereich strömt.

11. Verfahren nach Anspruch 10, **dadurch gekennzeichnet, dass** diese Unterteilung im Wesentlichen über die obere Hälfte dieser Höhe erfolgt.

12. Verfahren nach einem der Ansprüche 4 bis 11, **dadurch gekennzeichnet, dass** im Wesentlichen in Höhe des Einlassbereichs des Strömungsleitrohrs das aufzubereitende Rohfluid eingelassen und das Flockungsgemisch ausgelassen wird.

13. Verfahren nach einem der Ansprüche 1 bis 12, **dadurch gekennzeichnet, dass** das Flockungsmittel ein natürliches, mineralisches oder synthetisches Polymer ist.

14. Verfahren nach einem der Ansprüche 1 bis 13, **dadurch gekennzeichnet, dass** das Flockungsmittel, mit dem das aufzubereitende Rohfluid in dem Flockungsbecken vermischt wird, stromaufwärts dieses Beckens in das aufzubereitende Fluid eingebracht wurde.

15. Verfahren nach einem der Ansprüche 1 bis 13, **dadurch gekennzeichnet, dass** das Flockungsmittel, mit dem das aufzubereitende Rohfluid vermischt wird, in das Flockungsbecken eingebracht wird.

16. Verfahren nach Anspruch 15, **dadurch gekennzeichnet, dass** das Flockungsmittel zwischen dem Einlass des Flockungsbeckens und dem Einlass des Strömungsleitrohrs eingebracht wird.

17. Verfahren nach Anspruch 15, **dadurch gekennzeichnet, dass** das Flockungsmittel in den mittleren Bereich eingebracht wird.

18. Verfahren nach Anspruch 15, **dadurch gekennzeichnet, dass** das Flockungsmittel an der Grenze zum mittleren Bereich eingebracht wird.

19. Verfahren nach Anspruch 18, **dadurch gekennzeichnet, dass** zumindest ein Teil des Flockungsmittels ringförmig am Umfang des Einlasses des mittleren Bereichs koaxial zum Strömungsleitrohr eingespritzt wird.

20. Verfahren nach einem der Ansprüche 1 bis 19, **dadurch gekennzeichnet, dass** dem aufzubereitenden Rohfluid ferner ein pulverförmiges Material im Flockungsbecken beigemischt wird.

21. Verfahren nach Anspruch 20, **dadurch gekennzeichnet, dass** das pulverförmige Material ein Zuschlagstoff ist, der aus einem unlöslichen Granulat besteht, das schwerer als das aufzubereitende Rohfluid ist.

22. Verfahren nach Anspruch 21, **dadurch gekennzeichnet, dass** der Zuschlagstoff aus einem Feinsand mit einer Teilchengröße zwischen 20 und 300 Mikron besteht.

23. Verfahren nach Anspruch 21 oder Anspruch 22, **dadurch gekennzeichnet, dass** der am Auslass des Trennungsbereichs erhaltene Schlamm aufbereitet wird und der Zuschlagstoff zurückgewonnen und in dem Flockungsbecken wiederverwertet wird.

24. Verfahren nach einem der Ansprüche 1 bis 23, **dadurch gekennzeichnet, dass** das aufzubereitende Rohfluid vor dessen Einbringen in das Flockungsbecken mit einem Koagulationsmittel vermischt wird.

25. Verfahren nach einem der Ansprüche 1 bis 24, **dadurch gekennzeichnet, dass** das Hauptfluid aufzubereitendes Wasser ist.

26. Verfahren nach Anspruch 25, **dadurch gekennzeichnet, dass** das aufzubereitende Wasser vor dessen Einbringen in das Flockungsbecken mit einem Koagulationsmittel, das ein Mineralsalz, wie etwa Eisen- oder Aluminiumsalz, enthält, vermischt wird.

27. Verfahren nach einem der Ansprüche 1 bis 26, **dadurch gekennzeichnet, dass** das Trennen durch Abscheiden erfolgt.

28. Verfahren nach einem der Ansprüche 1 bis 26, **dadurch gekennzeichnet, dass** das Trennen durch Flotation erfolgt.

29. Verfahren nach Anspruch 27 oder Anspruch 28, **dadurch gekennzeichnet, dass** das Trennen mit Hilfe von Trennungshilfseinrichtungen, wie Platten, Lamellen oder geneigten bzw. vertikalen Rohren, erfolgt.

30. Verfahren nach einem der Ansprüche 27 bis 29, **dadurch gekennzeichnet, dass** das Flockungsgemisch tangential in den Trennungsbereich so eingebracht wird, dass ein Wirbeleffekt hinzukommt, der dem Abscheidungseffekt hinzukommt.

31. Reaktor, bestimmt zur Flockungsbehandlung eines aufzubereitenden Rohfluids, das mit kolloidalen oder gelösten, suspendierten Verunreinigungen beladen ist, umfassend ein Becken (10, 10', 10"), das mit zumindest einem Fluideinlass und zumindest einem Fluidauslass versehen ist, und zumindest einen Flockungsbereich innerhalb eines Bads, wo das aufzubereitende Fluid mit einem Flockungsmittel vermischt wird, umfassend:
- ein Strömungsleitrohr (2A), das an seinen beiden Enden offen und vertikal so angeordnet ist, dass es vollständig in das Bad des Beckens eingetaucht ist und dabei vom Boden dieses Beckens beabstandet bleibt und einen mittleren Bereich (2) gegenüber einem Umfangsbereich (3) abgrenzt, wobei dieser mittlere Bereich und dieser Umfangsbereich an den beiden Enden dieses Rohrs miteinander kommunizieren, wobei der Umfangsbereich mit dem Fluid-Einlass und -Auslass kommuniziert,
- einen Rührer (8) mit vertikaler Welle, der in diesem Rohr so angeordnet ist, dass er darin eine turbulente, axiale Bewegung in einer vertikalen Richtung erzeugt,
- ein Kreuzstück (5), das aus mehreren vertikalen Wänden gebildet ist, die sich horizontal ausgehend von einem gemeinsamen Steg (7) erstrecken, der im Wesentlichen in der Verlängerung der Achse des Rührers diesem nachgelagert liegt, so dass die aus dem Rohr austretende Strömung winklig zum Umfangsbereich hin verteilt wird.

32. Reaktor nach Anspruch 31, **dadurch gekennzeichnet, dass** das Strömungsleitrohr einen konstanten Querschnitt hat.

33. Reaktor nach Anspruch 32, **dadurch gekennzeichnet, dass** das Strömungsleitrohr eine zylindrische Form hat.

34. Reaktor nach einem der Ansprüche 31 bis 33, **dadurch gekennzeichnet, dass** der Rührer im Wesentlichen auf halber Höhe im Rohr angeordnet ist.

35. Reaktor nach einem der Ansprüche 31 bis 34, **dadurch gekennzeichnet, dass** das Strömungsleitrohr einen Durchmesser zwischen 102 % und 120 % des Durchmessers des Rührers hat.

36. Reaktor nach einem der Ansprüche 31 bis 35, **dadurch gekennzeichnet, dass** der hydraulische Durchmesser des mittleren Bereichs zwischen 40 % und 60 % der mittleren Breite des Flockungsbereichs beträgt, der durch den mittleren Bereich und den Umfangsbereich gebildet ist.

37. Reaktor nach einem der Ansprüche 31 bis 36, **dadurch gekennzeichnet, dass** der Rührer so angeordnet und bewegungsgesteuert ist, dass eine vertikale Abwärtsbewegung in dem Rohr erzeugt wird, wobei das Kreuzstück zwischen dem unteren Bereich des Strömungsleitrohrs und dem Beckenboden angeordnet ist.

38. Reaktor nach Anspruch 37, **dadurch gekennzeichnet, dass** das Rohr ein unteres Ende aufweist, das in einem Abstand zwischen 1/3 und 2/3 seines Durchmessers dem Boden des Beckens gegenüberliegt.

39. Reaktor nach Anspruch 38, **dadurch gekennzeichnet, dass** das Rohr ein oberes Ende aufweist, das in einem Abstand zwischen 1/3 und 2/3 seines Durchmessers der Niveauhöhe der Oberfläche des in dem Becken enthaltenden Inhalts gegenüberliegt.

40. Reaktor nach einem der Ansprüche 37 bis 39, **dadurch gekennzeichnet, dass** der Abstand zwischen dem unteren Rohrende und dem Beckenboden und der Abstand zwischen dem oberen Rohrende und der Niveauhöhe des Bads zumindest annähernd 50 % des Rohrdurchmessers betragen.

41. Reaktor nach einem der Ansprüche 37 bis 40, **dadurch gekennzeichnet, dass** das Kreuzstück eine Höhe im Wesentlichen gleich zumindest 2/3 des Abstands zwischen dem unteren Rohrende und dem Beckenboden hat.

42. Reaktor nach Anspruch 41, **dadurch gekennzeichnet, dass** das Kreuzstück eine Höhe im Wesentlichen gleich dem Abstand zwischen dem unteren Rohrende und dem Boden des Rohrs hat.

43. Reaktor nach einem der Ansprüche 37 bis 42, **dadurch gekennzeichnet, dass** die vertikalen Wände des Kreuzstücks sich horizontal über eine Entfernung erstrecken, die im Wesentlichen zwischen 3/4 und 5/4 des Rohrradius beträgt.

44. Reaktor nach Anspruch 43, **dadurch gekennzeichnet, dass** die vertikalen Wände des Kreuzstücks sich horizontal über eine Entfernung erstrecken, die im Wesentlichen gleich dem Radius des Strömungsleitrohrs ist.

45. Reaktor nach einem der Ansprüche 37 bis 44, **dadurch gekennzeichnet, dass** das Kreuzstück vier Wände aufweist, die um 90° um die Achse des Strömungsleitrohrs herum versetzt sind.

46. Reaktor nach Anspruch 45, **dadurch gekennzeichnet, dass** zwei der Wände quer zu der Richtung angeordnet sind, in welcher das aufzubereitende Rohfluid in das Flockungsbecken gelangt.

47. Reaktor nach einem der Ansprüche 37 bis 46, **dadurch gekennzeichnet, dass** über zumindest einen Teil der Gesamthöhe, welche den Beckenboden und die Badoberfläche trennt, vertikal verlaufende Wände den Umfangsbereich zwischen Einlassbereich und Auslassbereich aufteilen.

48. Reaktor nach Anspruch 47, **dadurch gekennzeichnet, dass** diese vertikal verlaufenden Wände sich über eine vertikale Entfernung erstrecken, die zwischen 40 % und 60 % dieser Gesamthöhe beträgt.

49. Reaktor nach Anspruch 47 oder Anspruch 48, **dadurch gekennzeichnet, dass** der Reaktor zumindest zwei vertikal verlaufende Trennwände aufweist, die sich im Wesentlichen über die obere Hälfte des Beckens zwischen dem Strömungsleitrohr und dem Fluideinlass bzw. dem Fluidauslass erstrecken, so dass das aufzubereitende Rohfluid dazu gezwungen wird, zumindest einmal in den mittleren Bereich zwischen dem Fluideinlass und dem Fluidauslass zu strömen.

50. Reaktor nach einem der Ansprüche 47 bis 49, **dadurch gekennzeichnet, dass** diese vertikal verlaufenden Wände sich über eine Höhe erstrecken, die zwischen der Niveauhöhe des Hauptfluideinlass und der Niveauhöhe des Rührers liegt.

51. Reaktor nach einem der Ansprüche 47 bis 50, **dadurch gekennzeichnet, dass** die vertikal verlaufenden Wände sich von dem Umfang des Umfangsbereichs bis zum Rohr erstrecken.

52. Reaktor nach einem der Ansprüche 37 bis 51, **dadurch gekennzeichnet, dass** der Einlass- und der Auslassbereich nahe dem Niveau der Oberfläche angeordnet sind und jeweils mit einer Platte ausgestattet sind, die dem Einlass bzw. dem Auslass gegenüberliegend quer verlaufend angeordnet ist, so dass sie einen Siphon bildet.

53. Reaktor nach einem der Ansprüche 31 bis 52, **dadurch gekennzeichnet, dass** er ferner einen Einspritzstutzen zum Einspritzen von Flockungsmittel aufweist, der mit einer Flockungsmittelquelle verbunden ist.

54. Reaktor nach Anspruch 53, **dadurch gekennzeichnet, dass** dieser Einspritzstutzen für Flockungsmittel zwischen dem Einlass für aufzubereitendes Rohfluid und dem Einlass des Strömungsleitrohrs liegt.

55. Reaktor nach Anspruch 53, **dadurch gekennzeichnet, dass** er einen ringförmigen Einspritzstutzen zum Einspritzen von Flockungsmittel aufweist, der koaxial zum Einlass des Strömungsleitrohrs angeordnet ist.

56. Reaktor nach einem der Ansprüche 31 bis 55, **dadurch gekennzeichnet, dass** er ferner einen Einspritzstutzen zum Einspritzen von pulverförmigem Material aufweist, der mit einer Pulvermaterialquelle verbunden ist.

57. Reaktor nach Anspruch 56, **dadurch gekennzeichnet, dass** diese Pulvermaterialquelle eine Feinsandquelle ist.

58. Reaktor nach einem der Ansprüche 31 bis 57, **dadurch gekennzeichnet, dass** das Becken einen einzigen Flockungsbereich aufweist, der ein Strömungsleitrohr aufweist.

59. Aufbereitungsanlage zum Aufbereiten von Fluid, enthaltend einen Reaktor nach einem der Ansprüche 31 bis 57 und einen Trennungsbereich, der mit dem Auslass des Reaktorbeckens verbunden ist.

60. Anlage nach Anspruch 59, **dadurch gekennzeichnet, dass** der Reaktor einen Einspritzstutzen zum Einspritzen von pulverförmigem Material aufweist, der mit einer Pulvermaterialquelle verbunden ist, und dass der Trennungsbereich einen Auslass aufweist, der dazu geeignet ist, Flocken enthaltenden Schlamm aufzunehmen und mit einer Vorrichtung zur Rückgewinnung von pulverförmigem Material verbunden ist, wobei die Pulvermaterialquelle mit dieser Rückgewinnungsvorrichtung verbunden ist.

61. Anlage nach Anspruch 59 oder Anspruch 60, **dadurch gekennzeichnet, dass** der Trennungsbereich eine Abscheidungseinrichtung ist, welche dem Becken nachgelagert ist.

62. Anlage nach einem der Ansprüche 59 bis 61, **dadurch gekennzeichnet, dass** der Trennungsbereich eine Abscheidungseinrichtung ist, die um das Becken herum angeordnet ist.

## Claims

1. Method of treating a raw fluid to be treated by flocculation and separation charged with impurities in suspension, colloidal impurities or dissolved impurities, wherein:
- the raw fluid to be treated is circulated with a flocculating reagent in a flocculation vat to obtain a flocculated mixture in which the impurities form flocs, and
- this flocculated mixture is circulated in a separation area in which the flocculated mixture is separated into clarified effluent and sludge containing the flocs,
**characterized in that**:
* a completely immersed flow-guide tube delimits a central area in the flocculation vat in which agitation (8) brings about turbulent axial flow of the mixture of the raw fluid to be treated and the flocculating agent in an axial direction of the flow-guide tube,
* that flow is divided (5) angularly by means of a static system opposing rotation of the flow disposed at the flow-guide tube outlet,
* this mixture is allowed to circulate in an opposite direction in a peripheral area (3) around the central area in order to reach the inlet of the central area, and
* a fraction of the mixture is passed to the separation area.

2. Method according to claim 1, **characterized in that** the flow in the central area is maintained at a flowrate from 1 to 20 times the inlet flowrate of the raw fluid to be treated.

3. Method according to claim 1 or claim 2, **characterized in that** the peripheral area is divided into an upstream peripheral area communicating with the inlet into the flocculation vat for raw fluid to be treated and a downstream peripheral area communicating with the flocculated mixture outlet, so as to cause the raw fluid to be treated that enters the flocculation vat to enter the central area at least once before passing to the separation area.

4. Method according to any one of claims 1 to 3, **characterized in that** the turbulent axial flow of the mixture is vertical.

5. Method according to claim 4, **characterized in that** the vertical turbulent axial flow is brought about by agitation (8) at mid-height in the central area.

6. Method according to claim 5, **characterized in that** the turbulent axial flow of the mixture is downward and the mixture is divided angularly over at least substantially two thirds of the height between the level of the outlet from the central area and the level of the bottom of the flocculation vat.

7. Method according to claim 6, **characterized in that** the mixture is divided angularly over substantially all of the height between the level of the central area and the level of the bottom of the flocculation vat.

8. Method according to claim 6 or claim 7, **characterized in that** the flow-guide tube delimiting the central area is disposed so that its bottom end forming its outlet faces the bottom of the flocculation vat at a distance from 1/3 to 2/3 the average width of the tube therefrom.

9. Method according to claim 8, **characterized in that** the flow-guide tube delimiting the central area is disposed so that its top end forming its inlet faces the surface of the contents of the flocculation vat at a distance from 1/3 to 2/3 of the average width of the tube therefrom.

10. Method according to any one of claims 6 to 9, **characterized in that** the peripheral area is divided over an upper portion of its height into an upstream peripheral area communicating with the inlet into the flocculation vat for the raw fluid to be treated and a downstream peripheral area communicating with the flocculated mixture outlet, so as to cause the raw fluid to be treated entering the flocculation vat to enter the central area at least once before passing to the separation area.

11. Method according to claim 10, **characterized in that** said division is effected over substantially the upper half of that height.

12. Method according to any one of claims 4 to 11, **characterized in that** the raw fluid to be treated enters and the flocculated mixture leaves substantially at the level of the inlet area of the flow-guide tube.

13. Method according to any one of claims 1 to 12, **characterized in that** the flocculating agent is a natural, mineral or synthetic polymer.

14. Method according to any one of claims 1 to 13, **characterized in that** the flocculating reagent with which the raw fluid to be treated is mixed in the flocculation vat is introduced into the fluid to be treated upstream of said vat.

15. Method according to any one of claims 1 to 13, **characterized in that** the flocculating reagent with which the raw fluid to be treated is mixed is introduced into the flocculation vat.

16. Method according to claim 15, **characterized in that** the flocculating reagent is introduced between the inlet of the flocculation vat and the inlet of the flow-guide tube.

17. Method according to claim 15, **characterized in that** the flocculating reagent is introduced into the central area.

18. Method according to claim 15, **characterized in that** the flocculating reagent is introduced at the boundary of the central area.

19. Method according to claim 18, **characterized in that** at least a fraction of the flocculating reagent is injected annularly at the periphery of the inlet of the central area and coaxially with the flow-guide tube.

20. Method according to any one of claims 1 to 19, **characterized in that** a powder is mixed with the raw fluid to be treated in the flocculation vat.

21. Method according to claim 20, **characterized in that** the powder is a ballast consisting of an insoluble granular material heavier than the raw fluid to be treated.

22. Method according to claim 21, **characterized in that** the ballast consists of fine sand with a particle size range from 20 to 300 microns.

23. Method according to claim 21 or claim 22, **characterized in that** the sludge is treated at the outlet from the separation area, where ballast is recovered and recycled to the flocculation vat.

24. Method according to any one of claims 1 to 23, **characterized in that** the raw fluid to be treated is mixed with coagulating agent before it is introduced into the flocculation vat.

25. Method according to any one of claims 1 to 24, **characterized in that** the main fluid is water to be treated.

26. Method according to claim 25, **characterized in that** the water to be treated is mixed with a coagulating agent including a mineral salt such as an iron or aluminium salt before it is introduced into the flocculation vat.

27. Method according to any one of claims 1 to 26, **characterized in that** separation is effected by sedimentation.

28. Method according to any one of claims 1 to 26, **characterized in that** separation is effected by flotation.

29. Method according to claim 27 or claim 28, **characterized in that** separation is effected with the assistance of separation aid members such as inclined or vertical tubes or plates.

30. Method according to any one of claims 27 to 29, **characterized in that** the flocculated mixture is introduced tangentially into the separation area so as to combine a vortex effect with the sedimentation effect.

31. Reactor for treating a raw fluid to be treated by flocculation charged with impurities in suspension, colloidal impurities or dissolved impurities, including a vat (10, 10', 10") having a fluid inlet, a fluid outlet and a flocculation area in a bath in which the fluid to be treated is mixed with a flocculating agent, said reactor including:
- a flow-guide tube (2A) open at both ends and disposed vertically so that it is completely immersed in the bath in the vat but remains at a distance from the bottom of the vat, delimiting a central area (2) from a peripheral area (3), the central and peripheral areas communicating with each other at both ends of the tube and the peripheral area communicating with the fluid inlet and outlet,
- a vertical-axis agitator (8) disposed in the tube so as to generate therein vertical turbulent axial movement,
- a cruciform baffle (5) formed of a plurality of vertical walls extending horizontally from a common edge (7) substantially aligned with the axis of the agitator, on the downstream side thereof, so as to divide angularly the flow towards the peripheral area leaving the tube.

32. Reactor according to claim 31, **characterized in that** the flow-guide tube has a constant section.

33. Reactor according to claim 32, **characterized in that** the flow-guide tube has a cylindrical shape.

34. Reactor according to any one of claims 31 to 33, **characterized in that** the agitator is disposed substantially at mid-height in the tube.

35. Reactor according to any one of claims 31 to 34, **characterized in that** the flow-guide tube has a diameter from 102% to 120% of the diameter of the agitator.

36. Reactor according to any one of claims 31 to 35, **characterized in that** the hydraulic diameter of the central area is from 40% to 60% of the average width of the flocculation area formed by the central area and the peripheral area.

37. Reactor according to any one of claims 31 to 36, **characterized in that** the agitator is disposed and driven so as to generate a downward vertical movement in the tube, the cruciform baffle being disposed between the bottom of the flow-guide and the bottom of the vat.

38. Reactor according to claim 37, **characterized in that** the tube has a bottom end facing the bottom of the vat at a distance from 1/3 to 2/3 of its diameter therefrom.

39. Reactor according to claim 38, **characterized in that** the tube has a top end facing the surface of the bath contained in the vat at a distance from 1/3 to 2/3 of its diameter therefrom.

40. Reactor according to any one of claims 37 to 39, **characterized in that** the distance between the bottom end of the tube and the bottom of the vat and the distance between the top end of the tube and the level of the bath are at least approximately 50% of the diameter of the tube.

41. Reactor according to any one of claims 37 to 40, **characterized in that** the cruciform baffle has a height substantially equal to at least 2/3 of the distance between the bottom end of the tube and the bottom of the vat.

42. Reactor according to claim 41, **characterized in that** the cruciform baffle has a height substantially equal to the distance between the bottom end of the tube and the bottom of the vat.

43. Reactor according to any one of claims 37 to 42, **characterized in that** the vertical walls of the cruciform baffle extend over a horizontal distance substantially from 3/4 to 5/4 of the radius of the tube.

44. Reactor according to claim 43, **characterized in that** the vertical walls of the cruciform baffle extend over a horizontal distance substantially equal to the radius of the flow-guide tube.

45. Reactor according to any one of claims 37 to 44, **characterized in that** the cruciform baffle comprises four walls offset at 90° around the axis of the flow-guide tube.

46. Reactor according to claim 45, **characterized in that** two of the walls are disposed transversely to the direction in which the raw fluid to be treated enters the flocculation vat.

47. Reactor according to any one of claims 37 to 46, **characterized in that** vertical walls divide the peripheral area between said inlet and outlet areas over at least a portion of the total height between the bottom of the vat and the surface of the bath.

48. Reactor according to claim 47, **characterized in that** these vertical walls extend over a vertical distance from 40% to 60% of the total height.

49. Reactor according to claim 47 or claim 48, **characterized in that** the reactor includes two or more vertical baffles extending substantially over the upper half of the vat, between the flow-guide tube, the fluid inlet and the fluid outlet, respectively, so as to cause the fluid to be treated to enter the central area between the fluid inlet and the fluid outlet at least once.

50. Reactor according to any one of claims 47 to 49, **characterized in that** the vertical walls extend over a height between the main fluid inlet level and the level of the agitator.

51. Reactor according to any one of claims 47 to 50, **characterized in that** the vertical walls extend from the periphery of the peripheral area to the tube.

52. Reactor according to any one of claims 37 to 51, **characterized in that** the inlet and outlet areas are near the level of the surface and each is provided with a transverse plate facing the inlet and the outlet, respectively, to form a siphon.

53. Reactor according to any one of claims 31 to 52, **characterized in that** it further comprises a flocculating reagent injection tube connected to a supply of flocculating reagent.

54. Reactor according to claim 53, **characterized in that** the flocculating reagent injection tube is situated between the inlet for raw fluid to be treated and the inlet of the flow-guide tube.

55. Reactor according to claim 53, **characterized in that** it includes an annular flocculating reagent injection tube coaxial with the inlet of the flow-guide tube.

56. Reactor according to any of claims 31 to 55, **characterized in that** it further comprises a powder injection tube connected to a supply of powder.

57. Reactor according to claim 56, **characterized in that** the supply of powder is a supply of fine sand.

58. Reactor according to any one of claims 31 to 57, **characterized in that** the vat includes a single flocculation area including a flow-guide tube.

59. Fluid treatment installation including a reactor according to any one of claims 31 to 57 and a separation area connected to the outlet of the vat of the reactor.

60. Installation according to claim 59, **characterized in that** the reactor comprises a powder injection tube connected to a powder supply and the separation area includes an outlet connected to a powder recovery system and adapted to collect sludge containing flocs, said powder supply being connected to said recovery system.

61. Installation according to claim 59 or claim 60, **characterized in that** the separation area is a sedimentation unit on the downstream side of the vat.

62. Installation according to any one of claims 59 to 61, **characterized in that** the separation area is a sedimentation unit around the vat.
